Europäisches Patentamt

European Patent Office

Office européen des brevets

(19)

(11) Publication number: **0 021 483**
**B1**

(12) **EUROPEAN PATENT SPECIFICATION**

(45) Date of publication of patent specification: **08.02.84**

(51) Int. Cl.³: **A 23 D 5/00, A 23 L 1/22**

(21) Application number: **80200514.0**

(22) Date of filing: **03.06.80**

(54) **Flavor-enhancing composition and method of preparation thereof.**

(30) Priority: **13.06.79 US 47974**

(43) Date of publication of application:
**07.01.81 Bulletin 81/1**

(45) Publication of the grant of the patent:
**08.02.84 Bulletin 84/6**

(84) Designated Contracting States:
**BE DE FR GB IT NL**

(56) References cited:
**FR - A - 1 346 373**
**FR - A - 2 049 113**
**FR - A - 2 285 077**
**US - A - 1 691 087**
**US - A - 3 071 475**
**US - A - 3 271 166**

(73) Proprietor: **THE PROCTER & GAMBLE COMPANY**
**301 East Sixth Street**
**Cincinnati Ohio 45202 (US)**

(72) Inventor: **Crosby, Thomas George**
**9355 Ranchill Drive**
**Cincinnati, Ohio 45231 (US)**

(74) Representative: **Brooks, Maxim Courtney et al,**
**Procter & Gamble (NTC) Limited Whitley Road**
**Longbenton**
**Newcastle-upon-Tyne NE12 9TS (GB)**

Courier Press, Leamington Spa, England.

Flavor-enhancing composition and method of preparation thereof

The present invention relates to the incorporation of a particulate flavor enhancing material into a liquefiable fat or oil. In particular, the present invention relates to microfine salt which is incorporated into a substantially water-free liquefiable fat or oil.

The desirability of intensifying the flavor of foodstuffs with flavor enhancing materials is well known. The most important and best known flavor enhancer is common salt or table salt (sodium chloride). However, the incorporation of salt and similar water-soluble materials into non-aqueous foods, i.e. fats or oils, is not easily accomplished.

In the case of butter or margarine, the incorporation of common salt presents no problem because there is an aqueous phase present in which the salt is dissolved and thus it can be uniformly dispersed throughout the composition. However, special griddling or grilling fats or flavored oils contain no water or aqueous phase in which to disperse the salt. Because of the significantly higher density of the salt, the salt settles out of a liquid fat or oil quickly. Where a solid fat, or fluid fat containing triglyceride hardstock, is heated, the salt also settles out of the liquefied fat or oil quickly because of the reduced viscosity.

The uniform delivery from an oil or fat product of solid or crystalline flavor enhancers, such as salt, to foodstuffs is particularly desirable in processes where the fat or oil is heated, as in the case of specialty griddling fats. However, utilization of butter or margarine to deliver the salt is undesirable in such processes because the salt remains with the aqueous phase which separates upon heating. Thus, the salt cannot be delivered uniformly to the foodstuff, particularly in institutional cooking. Additionally, the aqueous phase tends to cause objectionable spattering upon heating. Also, butters and margarines burn or brown on continued exposure to high temperatures.

The problem of incorporating salt into water-free fat compositions is noted in U.S.—A—3,271,166 to Van Leeuwen, issued September, 1977, wherein a fat is mixed with other ingredients in a pre-mix tank. Van Leeuwen notes that some improvement can be obtained by milling and sieving the salt. However, Van Leeuwen also observes that milling and sieving add considerably to the cost of the process without yielding wholly satisfactory results. Instead, Van Leeuwen utilizes an aqueous slurry of whey powder, salt and optionally milk powder, which is dried to form grains not exceeding 60 microns, preferably 50 to 60 microns. The dried product is then worked in a pre-mix tank with the fat to obtain the uniform suspension thereof.

One method for controlling the settling rate of a flavor enhancer in a liquefied fat or oil is by encapsulation. See U.S.—A—4,096,281 to Young et al., issued June 20, 1978, which discloses a method for producing a flavored popcorn by heating a combination of popcorn kernels, a cooking medium such as fat or oil, and an encapsulated flavoring substance having an average diameter of 5 to 25 micrometers. The combination used in Young et al can also include microfine salt of unspecified particle size, as disclosed in Examples 2 and 3. To obtain uniformity of distribution, the density of the encapsulated flavoring substance in Young et al is controlled so as to be as close as possible to the density of the cooking medium. However, encapsulation of ionic flavors such as salt generally cannot be used as a means for density control. The typical method for encapsulating substances is by spray drying which requires initial formation of a stable emulsion. Ionic substances such as salt tend to break the necessary emulsion and thus can be encapsulated only through the use of special techniques.

It is therefore an object of the present invention to provide a liquefiable fat or oil having salt or other non-encapsulated flavor enhancer incorporated therein such that the salt or flavor enhancer remains suspended in the oil or fat when liquid for a commercially acceptable period of time.

It is a further object of the present invention to provide a fat or oil composition, which, when heated, uniformly delivers the salt or other non-encapsulated flavor enhancer to the foodstuff.

It is yet another object of the present invention to provide a fat or oil composition having salt or other non-encapsulated flavor enhancer incorporated therein which is substantially free of water or an aqueous phase.

It is yet another object of the present invention to provide a room-temperature pourable fat or oil composition containing a shelf-stable suspension of salt or other non-encapsulated flavor enhancer.

These and other objects of the present invention will become apparent in the description that follows.

Disclosure of the invention

The present application discloses a novel composition comprising a major amount, i.e. more than 50% by weight of the composition, preferably 90% to 97% by weight, of a liquefiable fat component, preferably a fluid fat containing at least 1% by weight triglyceride hardstock, and a flavor-enhancing amount of particles of a non-encapsulated particulate flavor-enhancing material, such as common salt, having a density of from 1.5 to 2.4 g/cc.

The flavor-enhancing material is characterized by the fact that it predominates in microfine particles having a size range of from 1 to 10 microns. The microfine particles have a particle size distribution sufficient to provide flavor-enhancing suspension of the material in the fat component, when the fat is liquid, for at least 2 hours. The compositions of the present application are further characterized as being substantially water-free, i.e. containing less than 5% of water.

By utilizing microfine particles of flavor-enhancing material, the flavor-enhancing material remains uniformly suspended for commercially acceptable periods of time even when the composition is heated. Thus, the present invention permits the suspension of relatively dense flavor enhancers, particularly ionic flavor enhancers such as common salt, in heated fats and oils. Also, because the composition of the present invention contain less than 5% of water, the problem of separation of the salt with the aqueous phase and spattering as in the case of butter or margarine is eliminated. Yet compositions of the present invention permit the uniform delivery of common salt in an oil or fat to the foodstuff similar to that occasioned by cooking or frying the foodstuff with butter or margarine. Where a fluid fat containing triglyceride hardstock is employed, compositions of the present invention provide shelf-stable suspension of salt for room-temperature pourable fat applications.

As used in the present application, the term "fat component" broadly includes all those edible fats or oils which are solid, plastic, fluid, i.e., pourable, or liquid at room temperature, i.e. 21.11° (70°F). Generally, the fat component must be liquefiable, i.e. liquid, at room temperature or upon heating to the temperature used for delivery of the flavor-enhancing material. Fats which are solid or plastic at room temperature satisfy the liquefication requirement because they generally melt or liquefy at those temperatures normally encountered in cooking operation. Most cooking systems utilizing heated fats or oils operate at temperatures of from 93.33°C (200°F) to 260°C (500°F). For example, griddling operations utilize temperatures on the order of 135°C (275°F) to 204.44°C (400°F). In certain operations, such as deep fat frying, temperatures as high as 204.4°C (400°F) and above are employed.

Solid or plastic fats which can be utilized in compositions of the present invention are the triglycerides having $C_{12}$ to $C_{22}$ fatty acid moieties. These materials can be derived from plants or animals or can be synthetic fats or oils. For example, animal fats such as lard, tallow, oleo oil, oleo stock, oleo stearin and the like, which are solid at room temperature can be utilized. Also, liquid oils, e.g. unsaturated vegetable oils, can be converted into plastic fats by partial hydrogenation of the unsaturated double bonds of the fatty acid constituents of the oil followed by conventional chilling and crystallization techniques or by proper mixture with sufficient triglycerides which are solid at room temperature to form a rigid interlocking crystalline structure which interferes with the free-flowing properties of the liquid oil. See U.S.A. 3,355,302 to Purves et al., issued Nov. 28, 1967, and 3,867,556 to Darragh et al., issued Feb. 18, 1975, for further examples.

Preferred fat components for the compositions of the present invention usually comprise fluid fats, i.e. pourable or liquid fats and oils. The term "fluid fat", as used herein with reference to the fat component, refers to a triglyceride composition characterized by a fluid or liquid consistency over a normal range of temperatures and having a sufficiently low content of triglycerides of melting point higher than 15.56°C (60°F) as to provide upon cooling of the composition from 37.78°C (100°F) to 15.56°C (60°F), an increase in the amount of solids of not more than 20%. Such fats will, thus, be fully pourable or liquid at room temperatures and will be appreciated as being fluid. Such fats typically comprise a triglyceride composition having acyl groups predominantly in the range of from 16 to 20 carbon atoms.

Fluid fats which can be utilized as the fat component of the composition of the present invention are known in the art. Examples of such fat materials and methods for their preparation can be found in U.S.—A—2,815,285 to Holman et al, issued December 3, 1957, and 3,595,674 to Schaffer et al, issued July 27, 1971. Other fluid fat materials can, however, be suitably employed.

Any of a variety of glyceride fat materials can be used when a fluid fat is desirable for formulation of the fat component of the composition of the present invention, provided the solids content is such as to provide, a fluid character as hereinbefore defined. Liquid glycerides useful herein are edible and comprise primarily triglyerides having $C_{12}$ to $C_{22}$ fatty acid moieties. The fatty acid moieties can be saturated or unsaturated. They can be derived from any of the naturally occurring glyceride oils such as soybean oil, cottonseed oil, peanut oil, rapeseed oil, sesame seed oil and sunflower seed oil. Also suitable are liquid oil fractions obtained from palm oil, lard, and tallow, as, for example, by graining or directed interestification followed by separation of the oil.

The fluid fat preferably includes triglycerides having acyl groups predominantly in the range of from 16 to 22 carbon atoms and having a polyunsaturated character. Preferred polyunsaturated triglycerides include those derived from soybeans, cotton-seed, peanut, safflower and sunflower seed.

Also suitable for use herein as glyceride fat materials are the so-called low molecular synthetic fats which are certain tri- or diglycerides in which one or two of the hydroxyl groups of the glycerine have been esterified with acetic, propionic, butyric or caprionic acids and one or two of the remaining hydroxyl groups of the glycerine have been esterified with higher molecular weight fatty acids having from 12 to 22 carbon atoms. Any mixture of the above-enumerated liquid glycerides can be used as the fat material for the fluid fat.

A preferred fluid fat contains a suspension of at least about 1% by weight triglyceride hardstock constituents in particulate form. The triglyceride hardstock is necessary for fluid fat compositions of the present invention where shelf-stable suspensions are desirable, e.g. the microfine flavor-enhancing material remains suspended in the fluid fat for 6 months or more in room-temperature pourable fat applications. The hardstock constituent usually amounts to from 1% to 15% by weight of the fat component, preferably from 2% to 5% by weight. The hardstock constituent comprises substantially fully hydrogenated normally solid fatty triglyceride, and optionally normal solid fatty emulsifier. The hardstock constituent ordinarily has an iodine value of less than 15; preferably it has an iodine value ranging from 1 to 12.

The normally solid fatty triglycerides in the hardstock constituent, i.e., the triglyceride hardstock, ordinarily contains in each of their acid moieties from 12 to 22 carbon atoms. The triglyceride hardstock comprises from 75% to 100% by weight of beta tending triglyceride and from 0% to 25% by weight of non-beta tending triglyceride. Preferably the triglyceride hardstock is all beta tending triglyceride. If the triglyceride hardstock contains non-beta tending triglycerides, the non-beta tending triglyceride usually amounts to 0.5% by weight of the triglyceride hardstock. The alpha, beta, and beta prime polymorphic shortening phases are described in the U.S.—A—2,521,219 to Holman et al., issued September 5, 1950.

Suitable normally solid triglycerides having strong beta-forming tendencies include, for example, substantially completely hydrogenated triglyceride fats derived from soybean oil, corn oil, hazelnut oil, lard, linseed oil, olive oil, peanut oil, and sunflower seed oil. Substantially completely hydrogenated soybean oil, for example, soybean oil hydrogenated to an iodine value of less than 10, is a preferred beta-tending triglyceride constituent. In the fluid fat, substantially all of the triglyceride hardstock constituent is present in the beta polymorphic phase. This can be achieved despite the fact that some non-beta tending triglyceride hardstock is utilized as part of the hardstock constituent. The triglyceride hardstock normally has a particle size in the range of from 1 micrometer to 200 micrometers, preferably from 3 micrometers to 100 micrometers. The presence of the triglyceride hardstock constituent in the beta phas and of all of the hardstock constituent in particulate form allows the successful processing of the hardstock and oil vehicle constituents into a fluid fat having a stable liquid or fluid state.

Compositions of the present invention can comprise any of a variety of optional additive materials commonly employed in edible fats and oils. Thus, for example, compositions can contain emulsifiers, such as mono- and diglyceride emulsifiers, and colorants, antifoamants or antioxidants, such as the polysiloxanes. Compositions of the present invention are preferably buttery flavored, e.g. flavored with the lower alkyl carboxylic acids, methyl ketones, lactones and the like which are well known in the art.

The compositions of the present invention further comprise a non-encapsulated particulate flavor-enhancing material. The density of the flavor-enhancing material can range from 1.5 g/cc, e.g. sugars, to 2.4 g/cc, e.g. sodium chloride. The present invention is particularly directed to flavor-enhancing materials having densities at the upper end of the range, especially the range from 1.9 to 2.3 g/cc which includes potassium and sodium chloride.

It is a requirement of the present invention that the flavor-enhancing material not be substantially soluble in the fat or oil component, i.e. less than 10% lipid soluble. Except for the foregoing solubility requirement, the term "particulate flavor-enhancing material" includes all types and forms of flavors and flavor enhancers imparting recognizable taste characteristics to the fat component which exist in their natural state as, or can be formed into, discrete, non-encapsulated solid or crystalline particles and are within the above-described density range. Examples of such flavor-enhancing materials include monosodium glutamate, sodium chloride, potassium chloride, mixtures of from 20% to 80% sodium chloride and 80% to 20% potassium chloride, sea salt, spices having the required density, sugars including dextrose, sucrose, fructose, maltose and lactose, artificial sweeteners including saccharin, cyclamates, aspartic acid peptides, sugar alcohols including sorbitol and mannitol, as well as mixtures of any of the foregoing ingredients.

A particularly preferable flavor-enhancing material is common salt. As defined herein, the terms "common salt", "table salt" and "salt" are used interchangeably to describe sodium chloride compositions containing predominant amounts of sodium chloride, including iodized salt and salt with anti-caking agents such as tricalcium phosphate.

It is important to the flavor and suspension characteristics of the compositions of the present invention that the flavor-enhancing material be in the form of microfine particles, i.e. particles in the size range of from 1 to 10 micrometers. When the particle size is increased to above 10 micrometers, the settling rate of the particles of flavor-enhancing material out of the fat or oil component when liquefied is generally too great. Moreover, extremely microfine particles less than 1 micrometer in size, are less effective in enhancing the flavor quality of foodstuff to which they are applied regardless of the amount of material used. Thus, while particles less than 1 micrometer in size are desirable for better suspension characteristics, a balance between suspendability and flavor-enhancing characteristics must be maintained. In the case of common salt, an average particle size of 2 to 4 micrometers based on averaging the weight percentages of the salt in each particle size category, i.e. 0.5 micrometer increments, gives good flavor impact and good suspension characteristics.

To provide the proper flavor and suspension characteristics, a flavor-enhancing amount of microfine particles are employed in a particle size distribution sufficient to provide a flavor-enhancing suspension of the flavor-enhancing material in the fat component, when liquid for a commercially acceptable period of time. What is a "flavor-enhancing amount" depends on various factors such as the particular type of flavor-enhancing material used, the type of flavor impact desired, the conditions under which the flavor-enhancing material is delivered, etc. Generally, from 0.1% to 20% by weight of the total composition can be flavor-enhancing material.

In the case of microfine common salt, the typical amount of salt used is from 1% to 5% by total weight of the composition. It is important, however, that at least 0.5% of the salt by weight of the total composition remain suspended in the fat component for commercially acceptable periods of time; otherwise the flavor impact is generally insufficient. For compositions used as butter or margarine substitutes, it is preferred that the amount of suspended common salt be from 1% to 2.5% by weight of the total composition.

In compositions of the present invention, the flavor-enhancing material can include particles above 10 micrometers in size. However, the flavor-enhancing material must contain a flavor-enhancing amount of microfine particles, i.e., particles having a size range from 1 to 10 micrometers, if the material is to act as a flavor enhancer of the foodstuff when the fat component is liquid. Moreover, the particle size distribution of the material, i.e. the amount of particles by weight in each particle size category within the 1 to 10 micrometer size range, must be controlled to insure a commercially acceptable flavor-enhancing suspension. Flavor-enhancing materials having densities close to 2.4 g/cc must have a particle size distribution predominating in particles at the lower end of the particle size range. By contrast, materials with densities close to 1.5 g/cc can have particle size distributions with greater amounts of particles at the upper end of the particle size range. In the case of common salt, it is preferable for optimum suspension characteristics that at least 95% by weight of the salt employed have a particle size of from 1 to 10 micrometers with the mixture of particles having an average particle size of 2 to 4 micrometers based on averaging the percentage weight of the salt in each particle size category, i.e. 0.5 micrometer increments.

It is important that a flavor-enhancing amount of the microfine particles remain suspended in the heated fat component when liquid for a commercially acceptable period of time. As used herein, a "commercially acceptable period of time" is defined as at least two hours. A two-hour time period for suspension is usually sufficient for most commercial operations where heated fats or oils are used. In the case of common salt having an average particle size of 2 to 4 micrometers, at least 50% by weight of the salt remains suspended in a heated fluid fat after 6 hours. Where a fluid fat is used and shelf stability is desirable, the amount of triglyceride hardstock can be manipulated to improve the suspension characteristics of the microfine flavor-enhancing material.

Sources of microfine particles of the flavor-enhancing material include separation from commercial materials by utilizing an air classifier or similar device. Preferably, the particles of the required size are produced by fine grinding, milling or other form of size reduction with or without classification or sieving. The flavor-enhancing material can be in various physical or crystalline forms, e.g. dendritic, flaked, fine granulated, amorphous, etc., so long as the particle size is within the ranges as hereinbefore described. A microscopic image analyzer is typically used to determine particle size.

While not wishing to be bound by any theory, it is believed that the ability of compositions of the present invention to provide particulate flavor-enhancing suspensions for commercially acceptable periods of time can be explained in terms of Stoke's law, to a certain degree. Under Stoke's law, drag forces and gravitational forces on a single particle in motion in a fluid, such as a liquefied fat or oil, are equated. From this relationship, the settling rate of the particle is found to be directly proportional to the differences in density or specific gravity between the particles and the fluid, as well as to the square of the particle size. The settling rate of the particle is also inversely proportional to the fluid viscosity. In more common terms, reduction in the size of the particle results in the particle remaining suspended for longer periods of time in a specified liquid having a specified viscosity.

Because particles are not always a perfect sphere as required by Stoke's law factors such as particle shape and uniformity of surface smoothness are also important in the settling rate of the microfine particles. Also, because Stoke's law deals with a single particle in a liquid, the amount and number of microfine particles also is a factor tending to increase the suspension time of the particles. In fluid fats containing the triglyceride hardstock, it is further believed that the particles of hardstock increase the suspension time of the microfine particles of flavor enhancer by providing either a capsulating agent for the flavor enhancer or a crystal on which the flavor enhancer "floats".

In the case of the present invention, the principle of Stoke's law and the above additional factors are capitalized on to produce compositions containing flavor-enhancing amounts of particles of microfine size, i.e. less than about 10 micrometers. At warmer temperatures used for specialty griddling fats, e.g. on the order of 135°C (275°F) to 190.56°C (375°F) high density flavor-enhancing materials such as common salt remain suspended for commercially acceptable periods of time, e.g. at least two hours, even though the viscosity of the fat component decreases. By comparison, common granulated salt with a particle size on the order of 150 to 400 micrometers in size settles substantially, if not entirely, out of a heated solid or fluid fat or oil, or a liquid fat or oil that does not contain triglyceride hardstock, in less than two hours.

It is recognized that a certain amount of settling occurs even when the particle size of the flavor-enhancing material is less than 10 micrometers. However, the use of microfine particles of material sufficiently increases the suspension time so that compositions of the present invention are very desirable as flavor-enhancing and delivery systems for many commercial operations utilizing heated fats. Also, the materials go back into suspension in the heated fat much more quickly and easily. For example, the slight stirring occasioned by dipping the foodstuff in the heated fat, or by measuring or ladling the liquefied fat, is sufficient to keep the microfine salt in uniform suspension.

Compositions of the present invention are particularly useful for delivering ionic flavor enhancers. Non-ionic flavor enhancers can be suspended in liquid fats or oils by encapsulation, e.g. less dense liquid flavors spray dried on a solid non-ionic flavorant such as dextrin. As noted previously, ionic flavor enhancers such as sodium chloride usually cannot be encapsulated with less dense materials because the emulsion necessary for spray drying is broken.

When common salt is utilized as the flavor-enhancing material, the compositions of the present invention have been found to have an increased gumming tendency when applied to heated surfaces, e.g. the composition forms gum or varnish-like deposits on the cooking surface. In such cases it is often desirable to add a triglyceride having acyl groups predominantly in the range of from 8 to 14 carbon atoms in an amount effective to reduce the gumming tendencies of the composition. A preferred triglyceride for addition to the fat component is coconut oil which predominates in acyl groups of from 12 to 14 carbon atoms. Other short chain triglycerides having an appreciable content of acyl groups of from 8 to 14 carbon atoms can likewise be employed. Examples include palm kernel oil, babassu oil, and myristic acid triglycerides.

The triglycerides which have an acyl groups from 8 to 14 carbon atoms are added to the fat component in an amount effective to reduce the gumming tendencies of the fat component when combined with the salt. Generally such triglycerides can be added in amounts ranging from 0.5% to 10% by weight. A preferred amount of the triglyceride added to the fat component is from 1% to 5% by weight.

A preferred composition of the present invention for use in pan frying and griddling can contain a small amount of lecithin, usually in the range of from 0.1% to 0.5% by weight of the composition, to provide anti-sticking properties. Lecithin, while effective to provide anti-sticking properties, tends to promote gumming of the frying or griddling composition. Thus, the addition of the triglyceride having acyl groups of from 8 to 14 carbon atoms is desirable when lecithin is used as an anti-stick compound.

The compositions of the present invention have various applications where it is desirable to deliver a flavor-enhancing material to a foodstuff. For example, compositions of the present invention can be used in baking, griddling, broiling, frying, bun machine operations, deep fat frying or the like. Also, compositions of the present invention can be used in the preparation of seafood, bread, cookies, potatoes such as hash browns, broiled fish, sauces for vegetables or similar foods. Further, fluid fat compositions containing triglyceride hardstock which employ common salt as the flavor-enhancing material can be utilized wherever butter is used, e.g. spread usage on toast.

Because many, if not all, flavor-enhancing materials, e.g. common salt, are water soluble compositions of the present invention must contain less than 5% of water. When the salt is dissolved in the aqueous phase, the salt is delivered non-uniformly to the foodstuff if the aqueous and fat phases separate, as in heating. However, the compositions of the present invention can include low water content margarines wherein the aqueous phase formed is insufficient to dissolve an appreciable amount of the water-soluble material, i.e. water forms less than 5% of the composition. Preferably, the water content is on the order of 2% or less, preferably 0.1% or less by weight of the composition as in the case of specialty griddling fats. In the case of common salt, the water content should not exceed 3 parts by weight per 1 part by weight salt.

A number of methods can be utilized for preparing compositions according to the present invention. One method is to add the microfine particles of the flavor-enhancing material directly to the particular fat component. The microfine material is mixed or stirred to give a uniform dispersion of the flavor-enhancing material in the fat component. In the case of compositions utilizing microfine common salt, the salt should be mixed or dispersed in such a way as to prevent agglomeration of the salt particles into larger masses.

Various types of mixers can be employed for uniformly dispersing the flavor-enhancing material in the fat or oil. For example, the mixer can be a planetary paddle mixer, a sigma mixer, a ribbon blender, a twin paddle mixer, a Hobart mixer, and other well-known mixers such as Omni mixers.

Another method for producing a suspension of microfine particles of flavor-enhancing material according to the present invention in the fat component is by homogenization. First, particles of flavor-enhancing material larger than the size required, e.g. greater than 10 micrometers, are added to the fat component in a homogenizer, i.e. a plunger reciprocally moving within an orifice. The mixture of flavor-enhancing material and fat component are homogenized until the particle size of the flavor-enhancing material has been reduced to the desired dimensions and the particles suspended in the fat.

Another desirable method for making compositions of the present invention, especially where common salt is used, as is follows. First, microfine salt is added to a liquid fat or oil and mixed well to form a concentrate. Next, the concentrate is added to the remainder of the fat component such as a liquid fat and mixed to uniformly disperse the concentrate containing the salt throughout the fat or oil. The foregoing method has been found to be the best for avoiding salt agglomeration problems.

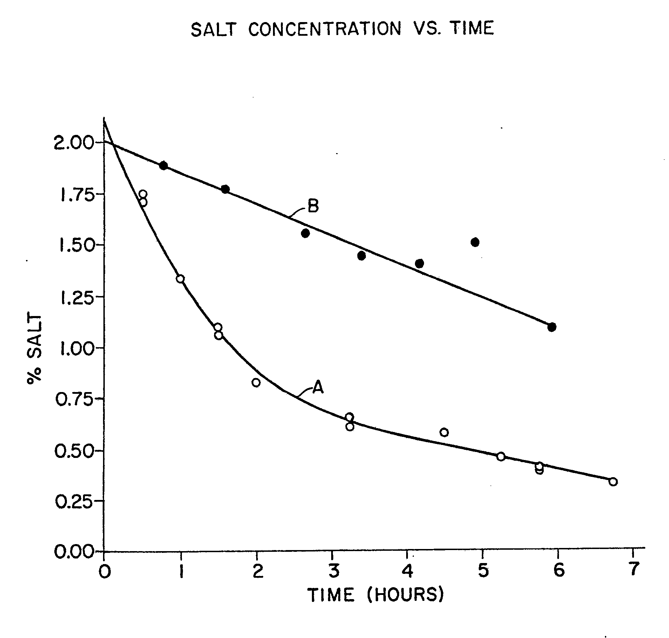

Brief description of the drawing

The figure shows salt settling curves for two fat compositions containing salt.

Best modes
Example I

The settling rate of salt from fat compositions containing two different particle size distributions of salt was determined. The fat component of each fat composition contained 95.5% by wt. soybean oil of iodine value 107 and 4.5% by wt. soybean oil hardstock of maximum iodine value of 8. Salt was added to the melted fat component which was then agitated with a Lightnin® mixer at a high rpm mix speed so as not to incorporate air into the fat component. Agitation was continued for a minimum of 20 minutes to thoroughly disperse the salt in the fat component.

Each fat composition was tested in a 4.73 l (5 quart) can which was 24.13 cm (9-1/2 inches) high and 16.51 cm (6-1/2 inches) in diameter. The cans were placed on a grill surface having a temperature of 162.78°C (325°F). The temperature throughout the fat composition in each can varied from 65.56°C (150°F) to 82.22°C (180°F).

Each fat composition was tested for salt content by using 25 ml pipettes to take 25 ml samples from the radial center of the can at a depth of 2.54 cm (1 inch) from the top of the can. The salt in each sample was extracted into an aqueous phase with subsequent potentiometric titration. The titrant used was silver nitrate. The values for the salt content for each sample had a precision of ±0.05% by wt. and were plotted versus time as shown in the Figure.

The fat composition represented by settling curve A (two samples taken for each point in time) in the Figure contained a commercial grade of salt known as Diamond Crystal G-95 TCP, made by The Diamond Crystal Salt Company, which can be used in compositions of the present invention. This salt had a sodium chloride purity of 99.95% by wt. before treatment with 1.5% by wt. tricalcium phosphate. Particle size distribution of this G-95 TCP salt was a minimum particle size of 1.5 micrometers, an average particle size of 3.9 microns, and a maximum particle size of 25.0 micrometers.

The fat composition represented by settling curve B in the Figure contained a specially processed microfine salt, which is particularly preferred in compositions of the present invention. The G-95 TCP salt was used as the starting material and was fine ground and air classified to provide an average salt particle size of less than or equal to 3 micrometers. Not more than 5% by wt. of this processed salt contained particles larger than 10 micrometers. The bulk of the salt by weight contained particles of about 3 micrometers in size.

A comparison of settling curves A and B illustrates significant differences between the commercial grade salt (A) and the specially processed salt (B). As shown by curve A, the fat composition containing the commercially grade salt, which started with about 2% by wt. salt content, had only 0.50% by wt. salt content after approximately 6 hours, a 75% loss of salt. Most of the initial salt loss is due to particles larger than 10 micrometers settling out, as evidenced by the fact that curves A and B are almost parallel after 3 hours. By contrast, the fat composition containing the specially processed salt (curve B), which started with about 2% by wt. salt content, had over 1% by wt. salt content after 6 hours, a less than 50% loss of salt.

Example II

A fat composition containing microfine salt was compared to butter to determine taste preference when used with scrambled eggs (Table II) or on toast (Table I). A Test Sample was prepared which contained approximately 4% by wt. soybean oil hardstock of iodine value 8, .125% by wt. lecithin, and .1% by wt. coconut oil and 2% by wt. microfine salt having the same particle size distribution characteristics as the G-95 TCP salt of Example I, the balance of the composition being soybean oil of iodine value 107. A butter flavor was added to the Test Sample in approximately a 570 ppm concentration.

The Test Sample and the butter were paired comparison tested by usage with scrambled eggs or on toast. A minimum of 100 persons was used for each panel. The panelists were asked to drink water before each sample and after the final sample. After the final sample had been tasted, it was removed and the panelists were asked three questions: (1) Which sample did they prefer overall? (Sample Preference); (2) Which sample in quality, had the most preferred butter flavor? (Butter Flavor Preference); and (3) Which sample, in quantity, had more butter flavor? (More Butter Flavor).

The results from the three foregoing questions were tabulated as follows:

### TABLE I

| Product | Sample pref. | Butter flavor pref. | More butter flavor |
|---|---|---|---|
| Butter | 42% | 43% | 29% |
| Test sample | 58% | 57% | 71% |

### TABLE II

| Product | Sample pref. | Butter flavor pref. | More butter flavor |
|---|---|---|---|
| Butter | 52% | 51% | 47% |
| Test sample | 48% | 49% | 53% |

For the last three columns of the above tables, the percentage number represents the actual percentage preference plus an equal splitting of the no preference percentage, an accepted statistical format. A 56% to 60% number is considered directionally significant, and a 60% or more number is considered statistically significant based on a 100 person panel.

As can be seen from the above tables, the Test Sample containing microfine salt had a directionally significant Sample Preference and Butter Flavor Preference and a statistically significant More Butter Flavor rating when compared to butter in usage on toast (95% confidence factor). As can also be seen from the above tables, the Test Sample containing microfine salt was equal in Sample Preference, Butter Flavor Preference and More Butter Flavor rating when compared to butter in usage with scrambled eggs (95% confidence factor).

## Claims

1. A flavor-enhancing composition containing a major amount of an edible liquefiable fat component, less than 5% of water, and a flavor-enhancing amount of particles of non-encapsulated particulate flavor-enhancing material characterized in that the particles of non-encapsulated particulate flavor-enhancing material have a density of from 1.5 to 2.4 g/cc and a particle size range of from 1 to 10 micrometers, said particles having a particle size distribution sufficient to provide a flavor-enhancing suspension of said flavor-enhancing material in said fat component when liquid for at least 2 hours.

2. A composition according to claim 1, characterized in that said flavor-enhancing material comprises from 0.1% to 20% by weight of the composition.

3. A composition according to claim 1 or 2 characterized in that said flavor-enhancing material is a member selected from monosodium glutamate, common salt, potassium chloride, sodium chloride and potassium and sodium chloride mixtures, spices, sugars, and mixtures thereof.

4. A composition according to any of claims 1 to 3 characterized in that said flavor-enhancing material is common salt having an average particle size of 2 to 4 micrometers and in an amount from 1% to 5% by weight of the composition.

5. A composition according to any preceding claim characterized in that said fat component comprises a fluid fat having 1% to 15% by weight triglyceride hardstock.

6. A composition according to claim 5 characterized in that it further comprises a triglyceride having acyl groups of from 8 to 14 carbon atoms in an amount of 0.5% to 10% by weight of said composition and/or lecithin in an amount of from 0.1% to 0.5% by weight of said composition.

7. A composition according to any preceding claim characterized in that said flavor-enhancing material is ionic.

8. A method for forming a flavor-enhancing composition according to any of claims 1 to 7 characterized by the step of substantially uniformly dispersing microfine particles of a non-encapsulated particulate flavor-enhancing material having a density of from 1.5 to 2.4 g/cc and a particle size range of from 1 to 10 micrometers in a major amount of an edible liquefiable fat component, said microfine particles having a particle size distribution sufficient to provide a flavor-enhancing suspension of the flavor-enhancing material in the fat component when liquid for at least two hours.

9. A method according to claim 8 characterized in that said dispersing step comprises adding a flavor-enhancing material having a particle size greater than 10 micrometers to the fat component and homogenizing the flavor-enhancing material and fat component until the microfine particles of flavor-enhancing material are formed and are substantially uniformly dispersed in the fat component.

10. A method according to claim 8 characterized in that the flavor-enhancing material is common salt and wherein said dispersing step comprises:

(a) adding the microfine particles of common salt to a liquid oil;

(b) mixing the microfine particles and liquid oil to form a concentrate;

(c) adding the concentrate to the fat component; and

(d) mixing the concentrate and the fat component until the microfine particles are substantially uniformly dispersed in the fat component.

## Patentansprüche

1. Geschmackssteigernde Zusammensetzung, enthaltend eine größere Menge eines eßbaren, verflüssigbaren Fettbestandteils, weniger als 5% Wasser und eine geschmackssteigernde Menge von Teilchen aus nichteingekapseltem feinteiligen geschmackssteigernden Material, dadurch gekennzeichnet, daß die Teilchen aus nichteingekapseltem feinteiligen geschmackssteigernden Material eine Dichte von 1,5 bis 2,4 g/cm³ und einen Teilchengrößenbereich von 1 bis 10 Mikrometer aufweisen, wobei diese Teilchen eine ausreichende Teilchengrößenverteilung, um eine geschmackssteigernde Suspension dieses geschmackssteigernden Materials in diese Fettbestandteil, wenn er mindestens 2 Stunden lang flüssig ist, bereitzustellen aufweisen.

2. Zusammensetzung gemäß Anspruch 1, dadurch gekennzeichnet, daß dieses geschmackssteigernde Material 0,1 bis 20 Gew.-% der Zusammenzetzung umfaßt.

3. Zusammensetzung gemäß Anspruch 1 oder 2, dadurch gekennzeichnet, daß dieses geschmackssteigernde Material ein Glied ausgewählt aus Mononatriumglutamat, Kochsalz, Kaliumchlorid, Natriumchlorid und Kalium- und Natriumchloridgemischen, Gewürzen, Zuckern und Gemischen daraus ist.

4. Zusammensetzung gemäß einem der Ansprüche 1 bis 3, dadurch gekennzeichnet, daß dieses geschmackssteigernde Material Kochsalz mit einer durchschnittlichen Teilchengröße von 2 bis 4 Mikrometer und in einer Menge von 1 bis 5 Gew.-% der Zusammensetzung ist.

5. Zusammensetzung gemäß irgend einem vorhergehenden Anspruch dadurch gekennzeichnet, daß dieser Fettbestandteil ein fließfähiges Fett mit einem Gehalt von 1 bis 15 Gew.-% Triglyceridhartfett umfaßt.

6. Zusammensetzung gemäß Anspruch 5, dadurch gekennzeichnet, daß sie weiter ein Triglycerid mit Acylgruppen mit 8 bis 14 Kohlenstoffatomen in einer Menge von 0,5 bis 10 Gew.-% dieser Zusammensetzung und/oder Lecithin in einer Menge von 0,1 bis 0,5 Gew.-% dieser Zusammensetzung umfaßt.

7. Zusammensetzung gemäß irgend einem vorhergehenden Anspruch, dadurch gekennzeichnet, daß dieses geschmackssteigernde Material ionisch ist.

8. Verfahren zur Bildung einer geschmackssteigernden Zusammensetzung gemäß einem der Ansprüche 1 bis 7, gekennzeichnet, durch die Stufe der im wesentlichen gleichförmigen Dispergierung mikrofeiner Teilchen eines nicht eingekapselten, feinteiligen, geschmackssteigernden Materials mit einer Dichte von 1,5 bis 2,4 g/cm³ und einem Teilchengrößenbereich von 1 bis 10 Mikrometer in einer größeren Menge eines eßbaren verflüssigbaren Fettbestandteils, wobei diese mikrofeinen Teilchen eine ausreichende Teilchengrößenverteilung aufweisen, um eine geschmackssteigernde Suspension des geschmackssteigernden Materials in dem Fettbestandteil, wenn dieser mindestens 2 Stunden lang flüssig ist, bereitzustellen.

9. Verfahren gemäß Anspruch 8, dadurch gekennzeichnet, daß diese Dispergierungsstufe das Zusetzen eines geschmackssteigernden Materials mit einer Teilchengröße größer als 10 Mikrometer zu dem Fettbestandteil und die Homogenisierung des geschmackssteigernden Materials und des Fettbestandteils, bis die mikrofeinen Teilchen des geschmackssteigernden Materials gebildet sind und im wesentlichen gleichförmig in dem Fettbestandteil dispergiert sind, umfaßt.

10. Verfahren gemäß Anspruch 8, dadurch gekennzeichnet, daß das geschmackssteigernde Material Kochsalz ist und worin diese Dispergierungsstufe:

(a) das Zusetzen der mikrofeinen Teilchen von Kochsalz zu einem flüssigen Öl;

(b) das Vermischen der mirkofeinen Teilchen und des flüssigen Öls unter Bildung eines Konzentrats;

(c) das Zusetzen des Konzentrates zu dem Fettbestandteil; und

(d) das Vermischen des Konzentrates und des Fettbestandteils, bis die mikrofeinen Teilchen im wesentlichen gleichförmig in dem Fettbestandteil dispergiert sind, umfaßt.

## Revendications

1. Composition augmentant l'arôme contenant une quantité importante d'un constituant gras, liquéfiable, comestible, moins de 5% d'eau, et une quantité augmentant l'arôme, de particules d'une matière particulaire non encapsulée augmentant l'arôme, caractérisée en ce que les particules de la matière particulaire non encapsulée augmentant l'arôme ont une masse volumique de 1,5 à 2,4 g/cm³ et une granulomètrie de 1 à 10 micromètres, ces particules ayant une répartition granulométrique suffisante pour créer une suspension augmentant l'arôme de cette matière augmentant l'arôme dans le constituant gras quand il est liquide pendant au moins 2 heures.

2. Composition selon la revendication 1, caractérisée en ce que la matière augmentant l'arôme compte pour 0,1 à 20% en poids de la composition.

3. Composition selon la revendication 1 ou 2, caractérisée en ce que la matière augmentant l'arôme est une substance choisie parmi le monoglutamate de sodium, le sel de table, le chlorure de potassium, le chlorure de sodium, les mélanges de chlorures de potassium et de sodium, des épices, des sucres et leurs melanges.

4. Composition selon l'une quelconque des revendications 1 à 3, caractérisée en ce que la matière augmentant l'arôme est du sel de table ayant une granulométrie moyenne de 2 à 4 micromètres, et dans une quantité de 1 à 5% du poids de la composition.

5. Composition selon l'une quelconque des revendications précédentes, caractérisée en ce que le constituant gras comprend une graisse fluide comportant 1 à 15% en poids de triglycérides durs.

6. Composition selon la revendication 5, caractérisée en ce qu'elle comprend en outre un triglycéride possédant des groupes acyles à 8 à 14 atomes de carbone en une quantité de 0,5 à 10% en poids de ladite composition et/ou de la lécithine en une quantité de 0,1 à 0,5% en poids de ladite composition.

7. Composition selon l'une quelconque des revendications précédentes, caractérisée en ce que la matière augmentant l'arôme est ionique.

8. Procédé de préparation d'une composition augmentant l'arôme selon l'une quelconque des revendications 1 à 7, caractérisé par l'étape consistant à disperser d'une manière sensiblement uniforme des particules microfines d'une matière particulaire non encapsulée augmentant l'arôme, ayant une masse volumique de 1,5 à 2,4 g/cm³ et une granulometrie de 1 a 10 micromètres, dans une quantité importante d'un constituant gras liquéfiable comestible, ces particules microfines ayant une répartition granulométrique suffisante pour créer une suspension, augmentant l'arôme, de la matière augmentant l'arôme dans le constituant gras quand ce dernier est liquide pendant au moins 2 heures.

9. Procédé selon la revendication 8, caractérisé en ce que ladite étape de dispersion consiste à ajouter au constituant gras une matière augmentant l'arôme ayant une granulomètrie supérieure à 10 micromètres, et à homogénéiser la matière augmentant l'arôme et le constituant gras jusqu'à ce que les particules microfines de la matière augmentant l'arôme soient formées et soient disspersées d'une manière sensiblement uniform dans le constituant gras.

10. Procédé selon la revendication 8, caractérisé en ce que la matière augmentant l'arôme est du sel de table, et dans lequel l'étape de dispersion consiste:

(a) à ajouter à une huile liquide les particules microfines de sel de table;

(b) à mélanger les particules microfines et l'huile liquide pour former un concentré;

(c) à ajouter le concentré au constituant gras; et

(d) à mélanger le concentré et le constituant gras jusqu'à ce que les particules microfines soient dispersées d'une matière sensiblement uniforme dans le constituant gras.

SALT CONCENTRATION VS. TIME